Europäisches Patentamt

European Patent Office

Office européen des brevets

(11) Veröffentlichungsnummer: **0 387 413 B1**

(12) **EUROPÄISCHE PATENTSCHRIFT**

(45) Veröffentlichungstag der Patentschrift: **12.10.94**

(51) Int. Cl.⁵: **G02B 6/28**, G02B 6/42

(21) Anmeldenummer: **89122940.3**

(22) Anmeldetag: **12.12.89**

(54) **Faseroptischer Strahlteiler.**

(30) Priorität: **16.03.89 DE 3908530**

(43) Veröffentlichungstag der Anmeldung:
**19.09.90 Patentblatt 90/38**

(45) Bekanntmachung des Hinweises auf die
Patenterteilung:
**12.10.94 Patentblatt 94/41**

(84) Benannte Vertragsstaaten:
**DE ES GB IT**

(56) Entgegenhaltungen:
DE-A- 2 938 649
FR-A- 2 586 305
GB-A- 2 201 806
US-A- 4 176 908

(73) Patentinhaber: **Deutsche Aerospace AG**

**D-81663 München (DE)**

(72) Erfinder: **Rieger, Robert**
**Weichingerstrasse 2**
**D-8201 Ostermünchen/Tuntenhausen (DE)**
Erfinder: **Tilly, Bodo**
**Lena-Christ-Strasse 25**
**D-8018 Grafing (DE)**

**Beschreibung**

Die Erfindung betrifft eine faseroptische vorrichtung zur Ein- bzw. Auskopplung von Licht wobei in bzw. aus eine(r) Lichtleitfaser aus bzw. in verschiedene(n) Richtungen der Umgebung der Lichtleitfaser Licht ein -bzw. ausgekoppelt werden kann und die aus einer Faser mit einem Kern und einem Mantel besteht.

Zur Verzweigung von in einer Lichtleitfaser geführtem Licht bzw. zur Einkopplung von Licht aus unterschiedlichen Richtungen in die Lichtleitfaser sind unterschiedliche Maßnahmen wie z.B. Schmelzkoppler oder die Verwendung von teildurchlässigen Spiegeln bekannt, die insgesamt den Nachteil haben, daß sie im Vergleich zum Faserdurchmesser ein relativ großes Volumen einnehmen und relativ aufwendige Herstellungsmethoden benötigen.

Aus der DE 29 29 186 C2 ist eine Lichtleitfaser mit schräg zur Faserlängsachse angeschliffener Stirnfläche bekannt, welche als bidirektionale Kopplungseinrichtung unter Ausnutzung der inneren Totalreflexion von Licht verwendbar ist. Bei einer derartigen, einflächigen, schrägen Stirnfläche mit Reflexion des Lichtes durch den Fasermantel hindurch treten schwer zu optimierende Verhältnisse bezüglich der Orientierung und Anordnung peripherer optischer Elemente (Detektoren, Lichtquellen etc.) sowie der Intensitätsverteilung auf. Außerdem ist damit lediglich eine bidirektionale Aufteilung des Lichtes in zwei Strahlrichtungen möglich.

Es ist daher Aufgabe der Erfindung einen faseroptischen Strahlteiler zu schaffen, der sehr kompakt und einfach aufgebaut und dessen Teilverhältnis einstellbar ist. Diese Aufgabe wird durch einen nach den kennzeichnenden Merkmalen des Patentanspruchs 1 ausgebildeten Strahlteiler gelöst.

Lichtwellenleiter mit abgeschrägten Stirnflächen sind zwar an sich bekannt (z.B. DE-AS 21 31 500), jedoch dienen solche Maßnahmen lediglich zur Veränderung des Aperturwinkels. Demgegenüber wird durch die erfindungsgemäße Einrichtung ein faseroptischer Strahlteiler geschaffen, der entweder das aus der Faser austretende Licht in verschiedene Richtungen der Umgebung abstrahlt, oder Licht aus diesen Richtungen empfangen kann. Damit dies möglich ist, darf der Winkel zwischen der Faserlängsachse und einer Fläche der z.B. dachkantprismenförmig angeschliffenen Stirnseite der Lichtleitfaser gewisse Grenzen nicht unter- bzw. überschreiten. Falls dieser Winkel den in Patentanspruch 2 angegebenen Wert annimmt, ist sogar eine T-förmige Verzweigung mit rechten Winkeln zwischen den einzelnen Strahlrichtungen möglich, was eine besonders einfache Konstruktion eines solchen Strahlteilers ermöglicht.

Der Strahlteiler kann zu unterschiedlichen Zwecken verwendet werden, wobei insbesondere die Verwendungen in einer optoelektrischen Sende- und Empfangseinrichtung gemäß Patentanspruch 5 oder als faseroptischer Koppler gemäß Patentanspruch 4 hervorzuheben sind.

Die Erfindung ist grundsätzlich nicht auf zweiflächig ausgebildete Stirnflächen der Lichtleitfaser beschränkt, so daß auch die Aufteilung in mehr als nur zwei Strahlrichtungen möglich ist.

Die Erfindung wird im folgenden anhand der in den Figuren teilweise schematisch dargestellten Ausführungsbeispiele näher beschrieben. Es zeigen:

Fig. 1    einen faseroptischen Strahlteiler innerhalb eines Faserkopplers,
Fig. 2    die Stirnflächen eines faseroptischen Strahlteilers und
Fig. 3    einen faseroptischen Strahlteiler innerhalb einer Sende- und Empfangseinrichtung.

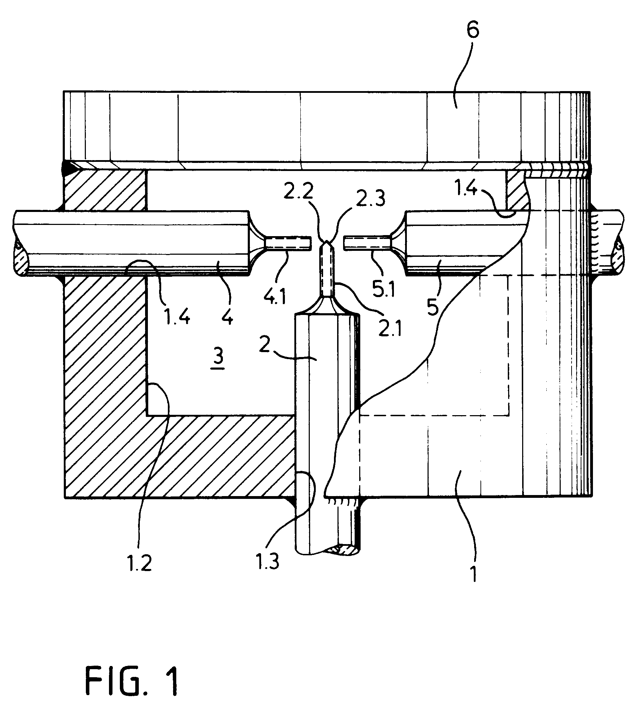

Bei dem in Fig. 1 dargestellten Ausführungsbeispiel ist innerhalb eines zylindrischen Gehäuses 1, welches z.B. aus einem Rundstab mit einer Sackbohrung 1.2 hergestellt werden kann, durch eine zu dieser Bohrung 1.2 koaxialen kleineren Bohrung 1.3 ein faseroptischer Lichtleiter 2 hindurchgeführt und in der Bohrung 1.3 fixiert. Der Lichtleiter 2 ist an seinem Ende von der Umhüllung (coating) befreit, so daß die blanke Lichtleitfaser 2.1 in den Innenraum 3 des Gehäuses 1 hineinragt. Das stirnseitige Ende der Lichtleitfaser 2.1 ist in Form eines Dachkantenprismas symmetrisch zur Längsachse angeschliffen und weist somit zwei Stirnflächen 2.2 und 2.3 auf.

Im rechten Winkel zum Lichtleiter 2 ist durch das Gehäuse 1 eine weitere Bohrung 1.4 derart hindurchgeführt, daß sich die Achsen der Bohrungen 1.3 und 1.4 in einem Punkt rechtwinklig kreuzen. Durch diese Bohrung 1.4 wird von beiden Seiten jeweils ein Ende weiterer Lichtleiter 4 und 5 eingeführt und mit der Gehäusewand verbunden. Die ebenfalls von der Umhüllung befreiten Enden der Lichtleitfaser 4.1 und 5.1 sind möglichst nahe an den Kreuzungspunkt der Bohrungen 1.3 und 1.4 herangeführt und liegen somit den Stirnflächen 2.2 und 2.3 möglichst nahe gegenüber.

Nach der Montage wird das Gehäuse 1 durch einen zylindrischen Deckel 6 hermetisch abgeschlossen, wobei vorher der Innenraum 3 durch ein getrocknetes und gereinigtes Inertgas gespült wird.

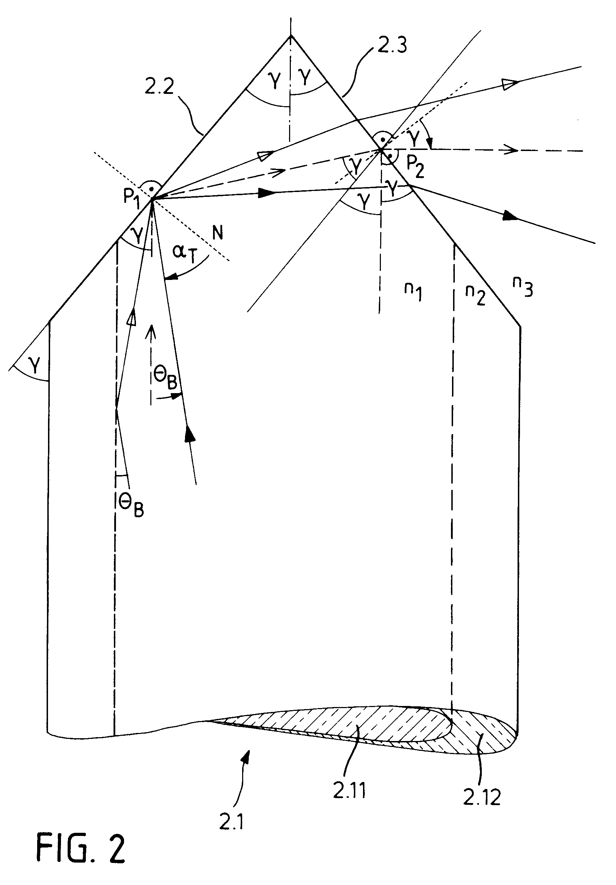

Die Funktion des in Fig. 1 dargestellten Kopplers wird nun anhand der Fig. 2 erläutert. In Fig. 2 ist die Spitze der Lichtleitfaser 2.1 dargestellt, welche im gezeigten Ausführungsbeispiel eine Stufenindex-Dickkernfaser sein soll. Diese besteht aus einem Kern 2.11 und einem Mantel 2.12 mit den Brechungsindizes $n_1$ bzw. $n_2$. Der Kerndurchmesser beträgt in diesem Fall typischerweise 200 $\mu$m, der äußere Durchmesser des Mantels 2.12 ca. 280 $\mu$m. Die Brechungsindizes $n_1$ und $n_2$ des Kerns 2.11 und des Mantels 2.12 betragen typischerweise:

$n_1$ = 1,453

$n_2$ = 1,436.

Bei Verwendung von Luft als Umgebungsmedium kann dessen Brechungsindex $n_3$ mit 1 angenommen werden.

Die Stirnseite der Lichtleitfaser 1 ist symmetrisch in Form eines Dachkantprismas angeschliffen, wobei der Schliffwinkel $\gamma$ zur Längsachse der Faser für beide Flächen 2.2 und 2.3 gleich ist. Bei Verwendung von Lichtleitfasern aus Kunststoff könnte die Ausbildung der Stirnseite der Lichtleitfaser zu einem Prisma auch durch einen Preßvorgang erzeugt werden.

Das in der Lichtleitfaser 2.1 geführte Licht muß nun bezüglich seines "Akzeptanzwinkels" $\theta_B$ innerhalb des Faserkerns die Bedingung

$$\sin(90° - \theta_B) = \frac{n_2}{n_1} \qquad (1)$$

oder umgerechnet

$$\theta_B = 90° - \arcsin\frac{n_2}{n_1} \qquad (2)$$

erfüllen. - Der Begriff "Akzeptanzwinkel" ist deshalb in Anführungszeichen gesetzt, um ihn von dem üblicherweise für die Einkoppung von Licht in die Faser verwendeten Akzeptanzwinkel zu unterscheiden. - Mit den o.g. Werten für $n_1$ und $n_2$ ergibt sich für den "Akzeptanzwinkel" $\theta_B$ = 8,7°, der also von einem Lichtstrahl innerhalb der Faser nicht überschritten werden darf, damit eine Weiterleitung möglich ist.

Bei Auftreffen eines solchen Lichtstrahles mit dem Grenzwinkel $\theta_B$ beispielsweise auf die Fläche 2.2 soll dieser reflektiert werden und durch die gegenüberliegende Fläche 2.3 austreten können. Damit dies erfüllt wird, muß zum einen an der Fläche 2.2 die Bedingung für Totalreflexion eingehalten werden. Der Grenzwinkel $\alpha_T$ für Totalreflexion ergibt sich aus

$$\sin\alpha_T = \frac{n_3}{n_1} \qquad (3)$$

oder umgerechnet

$$\alpha_T = \arcsin\frac{n_3}{n_1}. \qquad (4)$$

Mit den o.g. Werten für $n_1$ und $n_3$ ergibt sich als Grenzwinkel für Totalreflexion $\alpha_T$ = 43,5°.

Durch die Winkel $\theta_B$ und $\alpha_T$ sind damit die Grenzen für den Anschliffwinkel $\gamma$ gegeben. Für die obere Grenze $\gamma_{max}$ gilt:

$$\gamma_{max} = 90° - \theta_B - \alpha_T \qquad (5)$$

oder

$$\gamma_{max} = \arc \sin \frac{n_2}{n_1} - \arc \sin \frac{n_3}{n_1} . \qquad (6)$$

Die untere Grenze $\gamma_{min}$ des Schliffwinkels wird bei folgender Überlegung erkennbar:

Ausgehend von einem parallel zur Faserachse verlaufenden Lichtstrahl, der im Punkt $P_1$ an der Fläche 2.2 reflektiert wurde, bildet dieser reflektierte Strahl an der Fläche 2.3 einen Winkel $3\gamma$. Ein um den "Akzeptanzwinkel" $\theta_B$ von der Faserlängsachse abweichender Strahl bildet dann also mit der Grenzfläche 2.3 einen Winkel $3\gamma-\theta_B$. Im Grenzfall bildet die Differenz dieses Winkels mit dem Grenzwinkel $\alpha_T$ für Totalreflexion einen rechten Winkel zur Normalen N der Fläche 2.2. Also:

$$90° = (3\gamma_{min} - \theta_B) + \alpha_T \qquad (7)$$

oder

$$\gamma_{min} = \tfrac{1}{3} (\theta_B - \alpha_T + 90°). \qquad (8)$$

Durch Einsetzen der Gleichungen (2) und (4) ergibt sich somit

$$\gamma_{min} = \frac{1}{3} (180° - \arc \sin \frac{n_2}{n_1} - \arc \sin \frac{n_3}{n_1} ). \qquad (9)$$

Besonders interessant, da technisch einfach umsetzbar, ist derjenige Schliffwinkel $\gamma$, bei welchem das aus dem Lichtleiter austretende Licht zur Faserlängsachse einen Winkel von 90° bildet. Bei Betrachtung des Strahlenganges und dessen Brechung in Punkt $P_2$ ergibt sich dazu folgendes:

$$n_3 \cdot \sin \gamma = n_1 \cdot \sin | 90° - 3\gamma |. \qquad (10)$$

Für den Fall $n_3 = 1$ (Luft) ergibt sich dann die transzendente Funktion

$$\frac{\sin \gamma}{\sin | 90° - 3\gamma|} = n_1. \qquad (11)$$

Diese Funktion läßt sich auf die Grundform

$$y = \frac{\sin x}{x}$$

reduzieren, welche mittels Näherungsverfahren lösbar ist. Für den o.g. Wert des Brechungsindex $n_1$ des Kernmaterials ergibt sich daraus ein Schliffwinkel $\gamma = 38,4°$. Bei diesem Schliffwinkel ist also sowohl die Strahlrichtung des aus dem Lichtleiter austretenden Lichtes senkrecht zur Faserachse als auch eine Einkopplung in die Lichtleitfaser aus zwei gegenüberliegenden rechtwinklig zur Faserlängsachse verlaufenden Strahlrichtungen möglich. Dies bedeutet, daß bei dem in Fig. 1 dargestellten Ausführungsbeispiel sowohl Licht aus dem Lichtleiter 2 in die Lichtleiter 4 und 5, als auch in umgekehrter Richtung übertreten kann.

Die Aufteilung der Strahlintensitäten ist sowohl abhängig von der Justierung der optischen Achsen der Lichtleiter 4 und 5 bezüglich der Flächen 2.2 und 2.3 als auch vom Abstand zwischen den Flächen 2.2 und 2.3 von den jeweiligen gegenüberliegenden Stirnflächen der Fasern 4.1 und 5.1.

In der Fig. 1 sind zwar die absoluten Maße der Lichtleiter und des Gehäuses gegenüber den Originalmaßen erheblich vergrößert dargestellt, jedoch sind die Relationen zueinander in etwa richtig wiedergegeben. Das bedeutet, daß bei dem oben erwähnten Faserdurchmesser von ca. 280 $\mu$m die

4

Gehäuseabmessungen etwa 4 mm im Durchmesser und 2,5 mm in der Höhe betragen.

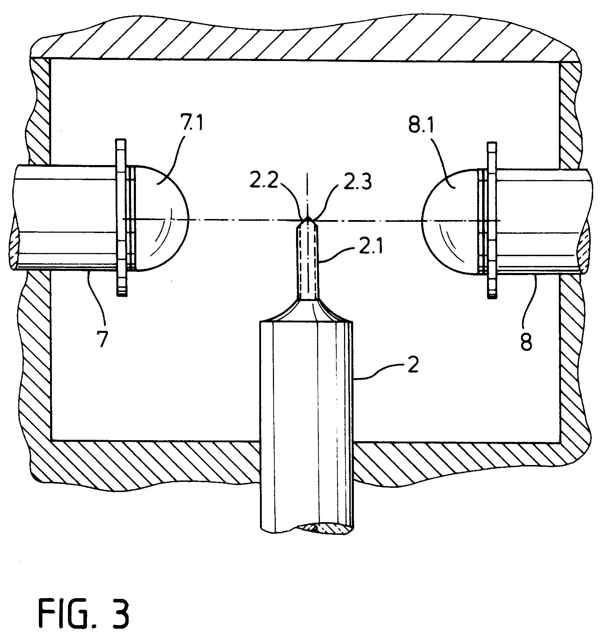

Bei dem in Fig. 3 dargestellten Ausführungsbeispiel sind in einem ähnlichen Gehäuse wie in Fig. 1 und daher nicht näher dargestellt dem Lichtleiter 2 mit dachkantprismenförmig angeschliffener Lichtleitfaser 2.1 eine Leuchtdiode 7 sowie eine Photodiode 8 im rechten Winkel zur Faserlängsachse gegenübergestellt. Die Leuchtdiode 7 und die Photodiode 8 besitzen jeweils Linsen 7.1 bzw. 8.1 und sind bezüglich ihres Abstandes zu den korrespondierenden Flächen 2.2 und 2.3 der Lichtleitfaser 2.1 derart angeordnet, daß die Leuchtfläche bzw. die photoempfindliche Fläche auf diese Flächen 2.2 bzw. 2.3 abgebildet werden.

Die gezeigte Einrichtung kann somit als optoelektrische Sende- bzw. Empfangseinrichtung verwendet werden, wobei für den Signaltransport lediglich eine Lichtleitfaser erforderlich ist, da diese entsprechend dem vorhergehenden Ausführungsbeispiel als Strahlteiler ausgebildet ist.

**Patentansprüche**

1. Faseroptische Vorrichtung zur Ein- bzw. Auskopplung von Licht wobei in bzw. aus eine(r) Lichtleitfaser aus bzw. in verschiedene(n) Richtungen der Umgebung der Lichtleitfaser Licht ein - bzw. ausgekoppelt werden kann, bestehend aus einer Faser (2.1) mit einem Kern (2.11) und einem Mantel (2.12), **dadurch gekennzeichnet,** daß die Stirnfläche der Lichtleitfaser (2.1) mit mindestens zwei zueinander geneigten ebenen Stirnseiten (2.2, 2.3) versehen ist, wobei der Winkel (alpha) zwischen der Faserlängsachse und einer der Stirnseiten (2.2, 2.3) der Bedingung

$$\frac{1}{3}\left(180° - \arcsin\frac{n_2}{n_1} - \arcsin\frac{n_3}{n_1}\right) \leqq \gamma \leqq \arcsin\frac{n_2}{n_1} - \arcsin\frac{n_3}{n_1}$$

genügt, so daß an einer der Stirnflächen (2.2, 2.3) Totalreflexion und an der anderen Stirnfläche (2.2, 2.3) Brechung des in der Faser geführten Licht erfolgt; dabei bedeutet:

$n_1$ = Brechungsindex des Faserkerns
$n_2$ = Brechungsindex des Fasermantels
$n_3$ = Brechungsindex des die Lichtleitfaser umgebenden Mediums.

2. Faseroptischer Strahlteiler nach Anspruch 1 **dadurch gekennzeichnet,** daß der Winkel $\gamma$ die Bedingung

$$\frac{\sin\gamma}{\sin|90°-3\gamma|} = \frac{n_1}{n_3}$$

erfüllt.

3. Strahlteiler nach Anspruch 1 oder 2 **dadurch gekennzeichnet,** daß die Stirnfläche der Lichtleitfaser in Form eines Dachkantprismas ausgebildet ist, wobei die Flächennormalen (N) der Dachkantprismaflächen (2.2, 2.3) und die Faserlängsachse komplanar und die Winkel $\gamma$ der einzelnen Flächen des Dachkantprismas gleich sind.

4. Faseroptischer Koppler mit einer faseroptischen Vorrichtung nach einem der Ansprüche 1 bis 3 **dadurch gekennzeichnet,** daß gegenüber einer der Stirnflächen der Vorrichtung jeweils eine Stirnseite einer Lichtleitfaser (4.1, 5.1) angeordnet ist, so daß Licht aus der Vorrichtung in diese Lichtleitfasern eingekoppelt bzw. aus den Lichtleitfasern in die Vorrichtung eingekoppelt werden kann.

5. Optoelektrische Sende- und Empfangseinrichtung mit einer faseroptischen Vorrichtung nach einem der Ansprüche 1 bis 3 **dadurch gekennzeichnet,** daß mindestens gegenüber einer der Stirnflächen der Vorrichtung eine Leuchtdiode (7) oder eine Photodiode (8) angeordnet ist, so daß Licht aus der Vorrichtung in die Photodiode (7) eingekoppelt bzw. aus der Leuchtdiode (8) in die Vorrichtung eingekoppelt werden kann.

# EP 0 387 413 B1

## Claims

1. Fibre-optical device for coupling in and out of light, in which respect a light can be coupled in or out of an optical fibre from or into different directions of the environment of an optical fibre, comprising a fibre (2.1) with a core (2.11) and a casing (2.12), **characterised in that** the end surface of the optical fibre (2.1) is provided with at least two plane end surfaces (2.2, 2.3) which are at a slant relative to each other, and that the angle (alpha) between the longitudinal axis of the fibre and one of the end surfaces (2.2, 2.3) meets the condition:

$$\frac{1}{3}\left(180° - \arcsin\frac{n2}{n1} - \arcsin\frac{n3}{n1}\right) < \gamma < \arcsin\frac{n2}{n1} - \arcsin\frac{n3}{n1}$$

so that total reflection on one of the end surfaces (2.2, 2.3) and refraction of light within the fibre on the other end surface (2.2, 3.3) takes place;
where

$n_1$ = refraction index of the fibre core
$n_2$ = refraction index of the fibre casing
$n_3$ = refraction index of the medium surrounding the optical fibre.

2. Fibre-optical beam splitter according to claim 1, **characterised in that** the angle $\gamma$ meets the condition:

$$\frac{\sin \gamma}{\sin |90°-3\gamma|} = \frac{n1}{n3}$$

3. Beam splitter according to claim 1 or 2, **characterised in that** the end surface of the optical fibre is arranged in the form of a roof-edge prism, and that the surface normals (N) of the roof-edge-prism surfaces (2.2, 2.3) and the longitudinal axis of the fibre are complanar and the angles $\gamma$ of the individual surfaces of the roof-edge prism are equal.

4. Fibre-optical coupler comprising a fibre-optical device according to one of claims 1 to 3, **characterised in that** a respective end surface of an optical fibre is arranged relative to one of the end surfaces of the device, so that light can be coupled from the device into these optical fibres or from the optical fibres into the device.

5. Opto-electrical transmitting and receiving device comprising a fibre-optical device according to one of the claims 1 to 3, **characterised in that** a light-emitting diode (7) or a photo diode (8) is arranged at least relative to one of the end surfaces of the device, so that light can be coupled in from the device into the photo diode (7) or from the light-emitting diode (8) into the device.

## Revendications

1. Dispositif à fibre optique pour le couplage ou le découplage de lumière, de la lumière pouvant être couplée dans ou découplée d'une fibre optique dans différentes directions de l'environnement de la fibre optique, composé d'une fibre (2.1) avec un coeur (2.11) et une gaine (2.12), caractérisé par le fait que la surface frontale de la fibre optique (2.1) est pourvue d'au moins deux faces (2.2, 2.3) frontales planes inclinées l'une par rapport à l'autre, l'angle (alpha) entre l'axe longitudinal de la fibre et l'une des faces frontales (2.2, 2.3) satisfaisant la condition

6

EP 0 387 413 B1

$$\frac{1}{3} \left(180° - \arcsin\frac{n_2}{n_1} - \arcsin\frac{n_3}{n_1}\right) \leq \gamma \leq \arcsin\frac{n_2}{n_1} - \arcsin\frac{n_3}{n_1}$$

de telle sorte qu'il se produise sur l'une des faces frontales (2.2, 2.3) une réflexion totale et sur l'autre face frontale (2.2, 2.3) une réfraction de la lumière amenée dans la fibre, avec:

$n_1$ = Indice de réfraction du coeur de la fibre
$n_2$ = Indice de réfraction de la gaine de la fibre
$n_3$ = Indice de réfraction du milieu entourant la fibre

2. Diviseur de rayons à fibre optique selon la revendication 1, caractérisé par le fait que l'angle $\gamma$ satisfait la condition

$$\frac{\sin\gamma}{|\sin 90° - 3\gamma|} = \frac{n_1}{n_3}$$

3. Diviseur de rayons à fibres optiques selon la revendication 1 ou 2, caractérisé par le fait que la surface frontale des fibres optiques est agencée sous la forme de prisme triangulaire, les normales (N) aux surfaces du prisme triangulaire (2.2. 2.3) et l'axe longitudinal de la fibre étant coplanaires et les angles $\gamma$ des différentes surfaces du prisme triangulaire étant égaux.

4. Coupleur à fibre optique comportant un dispositif à fibres optiques selon l'une des revendications 1 à 3, caractérisé par le fait qu'une face frontale d'une fibre optique (4.1, 5.1) est disposée en regard chaque fois de l'une des faces frontales du dispositif de telle sorte que de la lumière soit couplée du dispositif dans les fibres optiques ou des fibres optiques dans le dispositif.

5. Dispositif d'émission et de réception opto-électronique comportant un dispositif à fibre optique selon l'une des revendications 1 à 3, caractérisé par le fait qu'une diode électro-luminescente (7) ou une photodiode (8) est disposée en regard d'au moins une des surfaces frontales du dispositif de telle sorte que de la lumière soit couplée du dispositif dans la photodiode (8) ou de la diode électro-luminescente (7) dans le dispositif.

7

EP 0 387 413 B1

FIG. 1

8

FIG. 2

FIG. 3